(19) Europäisches Patentamt
European Patent Office
Office européen des brevets

(11) Publication number: **0 155 682**
**B1**

(12) # EUROPEAN PATENT SPECIFICATION

(45) Date of publication of patent specification: **29.11.89**

(51) Int. Cl.$^4$: **C 08 F 10/02,** C 08 F 4/64

(21) Application number: **85103241.7**

(22) Date of filing: **20.03.85**

(54) **Catalysts for homo- and copolymerization of ethylene and the polymers obtained by use thereof.**

(30) Priority: **20.03.84 IT 2013984**

(43) Date of publication of application:
**25.09.85 Bulletin 85/39**

(45) Publication of the grant of the patent:
**29.11.89 Bulletin 89/48**

(84) Designated Contracting States:
**BE CH DE FR GB IT LI NL**

(56) References cited:
**EP-A-0 086 472**
**EP-A-0 086 473**
**EP-A-0 086 644**
**EP-A-0 115 195**

**Handbook of X-rays, Ed.Emmet, F.Kaelble, Mac Grew-Hill, Book Co., 1967, Chapter 17.1**

(73) Proprietor: **Montedison S.p.A.**
**31, Foro Buonaparte**
**I-20121 Milan (IT)**

(72) Inventor: **Albizzati, Enrico**
**45, via F. Baracca**
**I-Arona (Novara) (IT)**
Inventor: **Pettenati, Enrico**
**45, via E. de Marchi**
**I-Milano (IT)**
Inventor: **Zucchini, Umberto**
**11, via G. Leopardi**
**I-Ferrara (IT)**
Inventor: **Cuffiani, Illaro**
**33, via Bagaro**
**I-Ferrara (IT)**

(74) Representative: **Zumstein, Fritz, Dr. et al**
**Dr. F. Zumstein sen Dr. E. Assman Dipl.-Ing. F. Klingseisen Dr. F. Zumstein jun.**
**Bräuhausstrasse 4**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 155 682 B1

**Description**

Background of the invention

From EP—A—86 644 catalysts for polymerizing olefins are known composed of a titanium catalyst component, an organoaluminum compound and a heterocyclic compound or a ketone in which the titanium catalyst component contains magnesium, titanium, halogen and an electron donor as essential ingredients.

EP—A—86 473 and EP—A—86 472 disclose catalysts for polymerizing olefins comprising a product of reaction of an organometallic compound of Al, an electron-donor compound reactive towards $MgCl_2$ and a solid comprising a halogenated Ti compound and an electron-donor compound, both supported on a Mg dihalide.

EP—A—83 074 discloses the polymerization of ethylene and mixtures thereof with olefins in the presence of catalysts containing a catalytic component in the form of emulsions and dispersions in an inert liquid medium or in an inert gas phase of a liquid phase comprising a compound or composition containing a compound of the metals of the Groups IV to VI of the Periodic System, immiscible in aliphatic hydrocarbons or which components are obtained from emulsions or dispersions in an inert liquid medium or in a gas phase of a precursor of the catalyst component, which in the liquid state is immiscible with the normal aliphatic hydrocarbons.

From EP—A—115 195 a catalyst composition is known composed of a magnesium-containing solid titanium catalyst component, containing as essential ingredients magnesium, titanium, a halogen and an electron donor, an organoaluminum compound catalyst component and an organic silicon compound catalyst component.

It is known also to polymerize ethylene with very highly active catalysts prepared from organometallic compounds of elements of the I, II and III groups of the Mendelyeev periodic system, and preferably of aluminum, and from the product obtained by supporting a titanium compound on a magnesium halide in active form. Examples of such catalytic systems are reported in patent GB 1,292,853; U.S. 4,089,808 and U.S. 4,298,718.

The supported catalytic systems of the above indicated type give, in some cases, ethylene polymers with relatively narrow molecular weight distribution (MWD).

For some applications, however, and in particular for preparing formed articles by injection molding, the molecular weight distribution should be particularly narrow.

A very narrow MWD is also an important requisite of the copolymers of ethylene with alpha-olefins having middle and low density, obtained by low pressure processes (Linear Low Density Polyethylene, LLDPE), in particular as far as the mechanical and optical properties of films are concerned.

Furthermore, in the technology for LLDPE, it is important also that the catalysts, besides allowing to obtain a rather narrow MWD, be capable of providing polymers with a density generally lower than 0.930 containing relatively small percentages of polymerized alpha-olefins. Furthermore, the copolymers should not contain a significant amount of polymer extractable by means of aliphatic solvents.

The invention is concerned with catalysts for the polymerization of ethylene and of mixtures thereof with other olefins, comprising the product of the reaction between the following components:

(a) an Al-alkyl compound;

(b) an electron-donor compound containing at least a nitrogen atom, said compound being reactive towards $MgCl_2$, but not towards Al-triethyl under standard conditions in which the reactivity is referred to the measurement methods hereinafter described, compound (b) being used in a molar ratio with respect to compound (a) of 0.01 to 10;

(c) the product of the reaction between at least a titanium compound containing at least a titanium-halogen bond and an anhydrous magnesium dihalide said reaction product being either devoid of any electron donor, or the compound having formula:

$$MgTiCl_6 \cdot 2 \text{ Ethylacetate}$$

and in particular the solid comprising the titanium compound supported on an anhydrous magnesium halide the crystallites of which have an average size below $3 \cdot 10^{-6}$ cm (300 Å).

Examples of nitrogenous compounds particularly suitable as component (b) are: 2,2,6,6 - tetramethylpiperidine, N - methyl - 2,2,6,6 - tetramethylpiperidine, tetramethyldiaminomethane, tetramethylethylendiamine, 2,2, - dimethyldihydroquinoline, 2,2,6,6 - tetramethylpiperidide - Al - diethyl.

The quantities of components (b) which can be used are preferably comprised between 0.05 and 1 mole per mole of Al-alkyl compound.

The order of addition of component (b) is not critical.

It can be prereacted with the Al-alkyl compound and the mixture or thus obtained reaction product can be caused to react with the solid component comprising the titanium compound and the magnesium compound, or it can be prereacted with the solid component, or, also, the three components can be fed separately into the polymerization reactor.

In the case of 2,2,6,6 - tetramethylpiperidine, prereaction with Al-trialkyl compound forms Al - dialkyl - 2,2,6,6 - tetramethylpiperidide.

Component (c) is represented preferably by the product obtained by supporting a tri- or tetravalent titanium halide or halogen-alcoholate, such as, for example $TiCl_4$, $TiCl_3$, $3TiCl_3 \cdot AlCl_3$, $TiCl_3OR$ (R being a hydrocarbon radical) on an anhydrous magnesium dihalide the crystallites of which have an average size below $3 \cdot 10^{-6}$ cm (300 Å) and ranging in particular from $1.5 \cdot 10^{-6}$ to $6 \cdot 10^{-7}$ cm (150 to 60 Å).

The average size of the crystallites is determined by measuring the widening at half height of the reflection (110) that appears in the X-ray spectrum of the magnesium halide.

The calculus of the average size is made by applying the Sherrer equation:

$$D(110)=\frac{K\times 1.542\times 57.3}{(B-b)\cos\theta}$$

where

K=constant (equal to 0.915 in the case of magnesium chloride, and equal to 1 in the case of other magnesium halides);

B=amplitude (in degrees) at half height of the reflection (110);

b=instrumental widening;

θ=Bragg angle.

In the case of magnesium chloride, the reflection (110) appears at an angle 2θ of 50.2°.

The X-rays spectrum is obtained by means of an apparatus equipped with an X-rays generator fitted with a Cu anode tube, by using a Cu Kα radiation, a scintillating goniometer, a 36 KV voltage, an 18 m A current, a Ni filter.

Catalytic components as defined at point (c) and methods of preparing the same are described as examples in the following patents: GB 1,292,853, GB 1,305,610, US 3,642,746, US 3,953,414, US 4,089,808, US 4,124,532, US 4,218,339, US 4,220,554, US 4,250,104, US 4,298,718, EP 43,220 and EP 83,074.

In particular, component (c) is prepared by co-grinding mixtures of the titanium compound with the anhydrous magnesium dihalide in such proportions that the titanium content in the mixture ranges from 0.1 to 10% by weight.

The co-grinding is carried out under conditions which result in reduction of the average size of the crystallites to the values given hereinabove.

Component (c) may be prepared, also, according to one of the methods described in US patents 4,089,808 and 4,124,532.

Component (c) may also consist of an emulsion or of a dispersion in an inert liquid medium or in an inert gaseous phase of a liquid phase comprising a titanium compound (containing at least a titanium-halogen bond) immiscible in the usual aliphatic hydrocarbons. Alternatively, it can be obtained from emulsions or dispersions in an inert liquid medium (or in an inert gaseous phase of a liquid phase) of a precursor that in the liquid phase is immiscible in the usual aliphatic hydrocarbons. Lastly, it can be the solid which can be obtained from these emulsions (dispersions).

In particular component (c) can be prepared by reacting $TiCl_4$ with an emulsion or a dispersion obtained by reaction of an anhydrous magnesium dihalide, in particular $MgCl_2$, with an anhydrous aluminum halide, in particular $AlCl_3$, in an aromatic hydrocarbon, in particular toluene, in the presence of a halogenated hydrocarbon, preferably 1,2 - dichloroethane.

The emulsions or dispersions that can be used as component (c) or for preparing component (c) are fully described in EP patent application 83,074.

The useful Al-alkyl compounds include the Al-trialkyls such as, for instance, $AlEt_3$, $Al(i\text{-}Bu)_3$, $Al(i\text{-}C_3H_7)_3$, $Al(n\text{-}octyl)_3$ and compounds containing two or more Al atoms bound to each other through atoms of O, N or $SO_4$ or $SO_3$ groups such as, for instance

$(C_2H_5)_2Al—O—Al(C_2H_5)_2$;

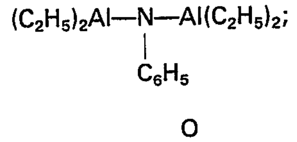

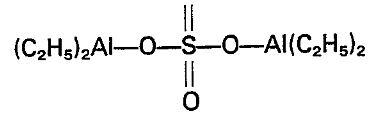

In the catalysts the Al/Ti ratio is generally comprised between 1 and 1,000.

The polymerization of ethylene and of mixtures thereof with minor proportions of alpha-olefins is carried out according to known methods: operating in a liquid phase in the presence or in the absence of an inert hydrocarbon solvent or in a gas phase.

Generally the polymerization temperature ranges from 40° to 160°C at atmospheric pressure or at higher pressures.

Hydrogen or other known regulators are used as molecular weight regulators.

The alpha-olefins which can polymerize with ethylene include alpha-olefins $CH_2=CHR$, in which R is an alkyl radical having from 1 to 10 carbon atoms, and especially propylene, butene-1, hexene-1 4-methylpentene-1 and octene-1.

The amount of alpha-olefin present in polymerized form in the copolymer is generally comprised between 0.5 and 10% by moles. We have noticed that the copolymers obtained with the catalysts of the invention where 2,2,6,6 - tetramethylpiperidine is prereacted with Al-trialkyl compound contain, for a given density, percentages of copolymerized alpha-olefin that are at least 20% lower than those of the copolymers prepared according to the catalyst systems known heretofore.

The density values, herein considered, are referred to polymers with MIE equal to 1 g/10′. When MIE values different from 1 g/10′ are concerned, the correction is carried out according to the diagram (Figure 3) reported in US patent 3,645,992. In particular, we have found that the polymers have density values lower than those laying on the straight line passing, on the density/alpha-olefin molar content diagram, through the points having, respectively, density 0.930 g/cm$^3$ and an alpha-olefin content of 1.1 and density 0.915 g/cm$^3$ and an alpha-olefin content of 3.7. For instance, the copolymers of the invention for a butene-1 molar content of 1.35, 2.25, 3.35 have density values, respectively, of 0.927, 0.922 and 0.916. The films obtained from these polymers present, with respect to the known polymers, a better balance of the optical and mechanical properties due to the better distribution of the alpha-olefin and to the narrower MWD.

It is known that in the field of LLDPE, MWD is a controlling factor which governs the properties of films thereof and in particular the balance of MD and TD properties (MD=medium direction; TD=transverse direction).

As practical measurement of the amplitude of the molar weight distribution the ratios between the degrees (melt index) MIN/MIE and MIF/MIE were used, where MIN, MIF and MIE are the melt indexes of the polymer measured at 190°C respectively with a weight of 10.00, of 21.6 and 2.16 kg (method ASTM D 1238): for polymers having comparable values of melt index MIE, the lower the values of MIF/MIE ratio the narrower the molecular weight distribution. MIF/MIE values lower than 30 and ranging in particular from 18 to 25, associated to relatively low percentages of copolymerized alpha-olefin for a given density, are particularly interesting in the case of LLDPE.

The test for the determination of compound (b) reactivity is carried out by using a potentiograph Metrohm model E 536, equipped with a titration bench E 535, an automatic burette E 552, a magnetic stirrer E 549 and titration cell EA 880.

A combined EA 281 electrode (Pt/Ag/AgCl/KCl 3 M) is used.

Use is made as titrant of a 0.5 M solution of Al-triethyl in hexane, which is added to a 0.5 M solution of Al-triethyl in hexane, which is added to a 0.5 M solution of the product under examination in benzene. One works at room temperature in a nitrogen atmosphere.

Compound (b) does not show, at the equivalent point of the titration, any appreciable potential change or drop. The drop is, on the contrary, sharp in the titration with amines such as isoquinoline and appreciable in the case of esters such as methyl paratoluate.

The reactivity test of the electron-donor compound with $MgCl_2$ is carried out under the following conditions: 2 g of $MgCl_2$ (21 mMoles) suspended in 200 cm$^3$ of toluene and 3.5 mMoles of the electron-donor under examination are introduced into a 500 cm$^3$ flask, in a nitrogen atmosphere. The mixture is let react at 25°C for 1 hour, then the solid is filtered and washed with 200 cm$^3$ of toluene and successively with 200 cc of n-heptane.

The solid is separated, dried and analyzed.

As $MgCl_2$ use is made of the product obtained by reacting $MgCl_2 2 \cdot 5C_2H_5$—OH with Al-triethyl according to the following modalities: 2,340 cm$^3$ of a 0.83 M solution of $Al(C_2H_5)_3$ in hexane are introduced into a 3,000 ml flask; keeping the temperature below 10°C, 136 g of $MgCl_2 \cdot 2.5C_2H_5$—OH are added in small doses. On completion of the addition, the whole is heated at 70°C for 4 hours, then the solid is filtered, washed repeatedly with n-heptane and dried under a vacuum of 0.2—0.5 Torr.

The surface area of the thus obtained $MgCl_2$ is 618 m$^2$/g and the pore volume 0.532 cm$^3$/g.

The following examples are given to illustrate the invention in more detail and are not intended to be limiting.

Example 1

The solid catalytic compound used in this example was obtained by grinding for 24 hours in a vibrating mill having 1 liter capacity and containing 2.5 kg of inox steel balls of 16 mm diameter, 60 g of a mixture of $TiCl_4$ and anhydrous $MgCl_2$, in such quantities as to have a titanium content of 2% by weight. 70 mg of the ground product were introduced with 1,000 ml of anhydrous n-heptane, 8 mMoles of $Al(C_2H_5)_3$ and 2.4 mMoles of 2,2,6,6 - tetramethyl piperidine (TMP) in a nitrogen atmosphere were introduced into a stainless steel autoclave having a 2 liter capacity and equipped with an anchor stirrer, and heated at 85°C. 4 hydrogen and 9 ethylene atm were added and the total pressure was kept constant for the duration of the polymerization by continuously feeding ethylene. After a 3 hour reaction, the polymerization was interrupted and the polymer was filtered and dried.

The polymer yield and the properties of same are recorded in Table I.

Comparison Example 1

Example 1 was repeated by using 32 g of solid catalytic component but omitting the use of TMP. The results of the polymerization test and the polymer properties are recorded in Table I.

Example 2

Example 1 was repeated by using 30 mg of solid catalytic component and 2.4 mMoles of tetramethyldiaminomethane instead of TMP. The results of the polymerization test and the polymer properties are recorded in Table I.

Example 3

Example 1 was repeated by using 59 mg of solid catalytic component and 8 mMoles of Al - triisobutyl instead of Al-triethyl.

The results of the polymerization test and the polymer properties are recorded in Table I.

Comparison Example 2

Example 3 was repeated by using 53 mg of solid catalytic component but leaving out the use of TMP.

The results of the polymerization test and the polymer properties are recorded in Table I.

Example 4

Example 1 was repeated by using 26 mg of solid catalytic component prepared starting from $MgCl_2 \cdot 2AlC_2H_5Cl_2$, according to Example 37 of US—A—4,089,808 in the following manner.

3.10 g of the complex $MgCl_2 \cdot 2AlC_2H_5Cl_2$ in powder form were introduced into a 250 $cm^3$ glass flask equipped with stirrer and reflux cooler and cooled to 0°C, whereupon 6.30 g of $Ti(O\text{-}n\text{-}C_4H_9)_4$, also cooled to 0°C, were added thereto in 30 minutes.

At the conclusion of the addition, the temperature was brought to 25°C and the mixture was diluted with 150 $cm^3$ of anhydrous n-heptane. It was then heated up to the solvent boiling point (98°C), and held under refluxing for 1 hour. After cooling, the solid contained was filtered on fritted bottom G3 in a nitrogen atmosphere, thoroughly washed on the filter with n-heptane until the disappearance of Cl′ ions from the filtrate, and then dried under vacuum at 50°C to constant weight.

The results of the polymerization test and the polymer properties are recorded in Table I.

Example 5

290 mg of solid catalytic component obtained by cogrinding, under the conditions of Example 1, $TiCl_4$ and anhydrous $MgCl_2$ in such amounts as to have a titanium content of 2% by weight in the coground product, 20 ml of n-heptane, 3.6 mMoles of $AlEt_3$ and 1 mMole of TMP were introduced into a 100 cc flask provided with a stirrer.

The mixture was let react for 2 hours. The solid, after having been washed by decantation, was kept in a heptane suspension.

2 ml of the suspension (equivalent to 60 mg of solid catalytic component) and 8 mMoles of $AlEt_3$ were used in the polymerization of ethylene according to the modalities recorded in Example 1.

The polymer yield and the properties of same are recorded in Table I.

Example 6

Example 1 was repeated by employing 22 mg of solid catalytic component consisting of $MgTiCl_6 \cdot 2CH_3COOC_2H_5$ prepared according to Example 9 of US—A—4,124,532 in the following manner.

In a nitrogen atmosphere, 2.6 g of anhydrous $MgCl_2$ (27.4 m.moles) and 3 ml of $TiCl_4$ (27.4 m.moles) are dissolved separately in 200 ml of anhydrous ethyl acetate and in 60 ml of anhydrous ethyl acetate, respectively. The two solutions are gathered and reacted under stirring for 4 hours at 60°C. From the concentrated solution a yellow crystalline solid precipitates on cooling, which is then isolated, recrystallized from ethyl acetate and dried under vacuum at 50°C. Such product, that decomposed at 190°C, revealed on analysis a composition corresponding to formula $MgTiCl_6 \cdot 2CH_3COOC_2H_5$.

The infrared and X-rays spectra of such product reveal that it is a well-defined compound, being thoroughly different from the infrared and X-rays spectra of the complexes $[TiCl_4 \cdot CH_3COOC_2H_5]_2$ and $MgCl_2 \cdot CH_3COOC_2H_5$.

The results of the polymerization test and the polymer properties are recorded in Table I.

Comparison Example 3

Example 4 was repeated by employing 25 mg of solid catalytic component, but omitting the use of TMP.

The results of the polymerization test and the polymer properties are recorded in Table I.

Comparison Example 4

Example 6 was repeated by employing 20 mg of solid catalytic component but omitting the use of TMP.

The results of the polymerization test and the polymer properties are recorded in Table I.

Comparison Example 5

Example 1 was repeated by using 70 mg of solid catalytic component and an equimolar quantity of diphenylamine instead of TMP. Diphenylamine is an electron-donor which under the hereinabove-mentioned standard conditions is not reactive with either Al-triethyl or with $MgCl_2$.

The results of the polymerization test and the polymer properties are recorded in Table I.

Comparison Example 6

Example 1 was repeated by employing 29 mg of solid catalytic component and an equimolar quantity of isoquinoline instead of TMP. Isoquinoline is an electron-donor which, under the hereinabove-mentioned standard conditions, is reactive both with Al-triethyl and with $MgCl_2$.

The results of the polymerization test and the polymer properties are recorded in Table I.

Example 7

Comparison Example 1 was repeated by employing an equimolar amount of diethyl - aluminum 2,2,6,6 - tetramethylpiperidide instead of Al-triethyl.

The results of the polymerization test and the polymer properties are recorded in Table I.

Example 8

Comparison Example 1 was repeated but using 30 mg of a catalytic component prepared by cogrinding for 90 hours 22 g of $MgCl_2$, 6.45 ml of 2,2,6,6 - tetramethylpiperidine and 4.2 ml of $TiCl_4$ in the mill described in Example 1.

The results of the polymerization test and the polymer properties are recorded in Table I.

Example 9

600 ml of anhydrous n-hexane, 8 mMoles of $Al(C_2H_5)_3$, 2.4 mMoles of TMP and 60 g of butene-1 were introduced at 25°C in a nitrogen atmosphere, into a stainless steel autoclave having a 2 l capacity, provided with an anchor stirrer. The temperature was brought to 65°C, 2.5 bar (2.5 atmospheres) of hydrogen and ethylene were introduced until a total pressure of 18 bar (18 atm) was reached. After 3 hours, 25 mg of the solid catalytic component employed in Example 1, suspended in 15 ml of n-hexane, were introduced through a steel gun and with an argon overpressure. After a period of time of 15 minutes, during which time ethylene was continuously fed, by keeping the pressure at 18 bar (18 atm), the polymerization test was interrupted and the obtained polymer was filtered and dried.

The results of the polymerization test and the other polymer properties are recorded in Table II.

Example 10

Example 9 was repeated by employing 40 g of butene-1. The results of the polymerization test and the polymer properties are recorded in Table II.

Example 11

Example 9 was repeated by using 22 mg of the solid catalytic component prepared according to Example 1 of US—A—4,218,339 in the following manner.

2.4 g of $MgCl_2$ (0.025 mole) and 17 g (0.05 mole) of $Ti(O\text{-}n\text{-}C_4H_9)_4$ were stirred in a flask in a nitrogen atmosphere at 160°C; after 4 hours $MgCl_2$ was throughly dissolved. The resulting solution, cooled down to 60°C, was diluted with 80 $cm^3$ of anhydrous n-heptane. Into this solution ketp at 60°C and under stirring, a solution of 5.8 $cm^3$ (0.05 mole) of $SiCl_4$ in 20 $cm^3$ of n-heptane was introduced in 1 hour. Once the addition was completed, the reaction mass was further heated for 1 h and 30 min. to 98°C. The resulting suspension was again brought to 60°C and 19.4 $cm^3$ (20.6 g) of polymethylhydrosiloxane (PMHS) of formula

$$(CH_3)_3SiO[(CH_3)HSiO]_nSi(CH_3)_3,$$

wherein n had a value of about 35, was dropped into it at 60°C and over a time of 2 hours.

At the conclusion of the addition, stirring was continued for 1 hour at a temperature of 98°C. After cooling to room temperature, the resulting precipitate was repeatedly washed with anhydrous n-hexane and finally dried under vacuum at 70°C to constant weight, thus obtaining 11.2 g of a red-orange power containing 16.95% of Ti.

The results of the polymerization test and the polymer properties are recorded in Table II.

Comparison Example 7

Example 9 was repeated but leaving out the use of TMP. The results of the polymerization test and the polymer properties are recorded in Table II.

Comparison Example 8

Example 10 was repeated but omitting the use of TMP. The results of the polymerization test and the polymer properties are recorded in Table II.

Comparison Example 9

Example 11 was repeated but omitting the use of TMP. The results of the polymerization test and the polymer properties are recorded in Table II.

TABLE I

| Example No. | Polymers (g) | Yield (gPE/g cat) | MIE (g/10′) | MIN (g/10′) | MIF (g/10′) | MIN/MIE | MIF/MIE |
|---|---|---|---|---|---|---|---|
| 1 | 480 | 6857 | 1.7 | 13.9 | 45.4 | 8.1 | 26.7 |
| 2 | 170 | 5666 | 0.39 | 2.3 | 8.48 | 5.9 | 21.5 |
| 3 | 290 | 4915 | 0.93 | 6.5 | 20.5 | 6.98 | 22.04 |
| 4 | 270 | 10384 | 0.53 | 4.15 | 13.01 | 7.8 | 24.6 |
| 5 | 410 | 6830 | 0.92 | 6.7 | 21.6 | 7.2 | 23.5 |
| 6 | 305 | 13860 | 3.7 | 22.5 | 79.2 | 6.1 | 21.4 |
| 7 | 273 | 3900 | 0.37 | 3.02 | 9.5 | 8.1 | 25.6 |
| 8 | 207 | 6900 | 3.9 | 28.4 | 105. | 7.3 | 26.9 |
| 1 comparison | 310 | 9687 | 0.87 | 8.9 | 37. | 10.2 | 42.5 |
| 2 comparison | 290 | 5470 | 0.29 | 2.9 | 12.1 | 10.0 | 41.7 |
| 3 comparison | 390 | 15600 | 3.69 | 31.26 | 110.52 | 8.47 | 31.6 |
| 4 comparison | 390 | 19500 | 8.71 | 80.1 | 32.1 | 9.2 | 36.8 |
| 5 comparison | 350 | 5000 | 0.74 | 7.2 | 29.9 | 9.73 | 40.4 |
| 6 comparison | 120 | 4130 | 0.91 | 9.6 | 35.5 | 10.5 | 39.0 |

TABLE II

| Example No. | MIE (g/10′) | MIF (g/10′) | MIF/MIE | Density ($g/cm^3$) | Butene-1 (%wt) | Crystallinity (%Rx) |
|---|---|---|---|---|---|---|
| 9 | 0.2 | 5.8 | 29. | 0.925 | 2.8 | 41 |
| 10 | 0.38 | 9.2 | 24.2 | 0.927 | 2.3 | 42 |
| 11 | 0.46 | 9.8 | 21.3 | 0.916 | 6.7 | 40 |
| 7 comparison | 0.2 | 8.9 | 44.5 | 0.925 | 3.8 | 46 |
| 8 comparison | 0.39 | 12.5 | 32. | 0.927 | 3.0 | 44 |
| 9 comparison | 0.48 | 15.8 | 33. | 0.916 | 8.0 | 42 |

**Claims**

1. Catalysts for the polymerization of ethylene and of mixtures thereof with other olefins, comprising the product of reaction between the following components:

(a) an Al-alkyl compound;

(b) an electron-donor compound containing at least a nitrogen atom, said compound being reactive towards $MgCl_2$, but not towards Al-triethyl under standard reaction conditions, compound (b) being used in a molar ratio with respect to compound (a), of 0.01 to 10;

(c) the reaction product between at least a titanium compound containing at least a Ti-halogen bond

and an anhydrous magnesium dihalide, said reaction product being either devoid of any electron donor, or the compound having the formula:

$MgTiCl_6 \cdot 2$ Ethylacetate

2. Catalysts according to claim 1 wherein nitrogeneous compound (b) is selected from the group consisting of 2,2,6,6 - tetramethylpiperidine, N - methyl - 2,2,6,6 - tetramethylpiperidine, tetramethyldiaminomethane, tetramethylethylendiamine, 2,2 - dimethyldihydroquinoline and 2,2,6,6 - tetramethylpiperidide - Al - diethyl.

3. Catalysts according to claim 2, wherein component (c) comprises a titanium compound supported on an anhydrous magnesium dihalide the crystallites of which have an average size below $1.5 \cdot 10^{-6}$ cm (150Å).

4. Catalysts according to claim 1, wherein component (c) is prepared by cogrinding mixtures of the titanium halide with the anhydrous magnesium dihalide in such proportions that the titanium content in the mixture is comprised between 0.1 and 10% by weight.

5. Catalysts according to claim 1, wherein component (c) consists of an emulsion or a dispersion in an inert liquid medium or in the inert gas phase of a liquid phase comprising a titanium compound immiscible in an aliphatic hydrocarbon or it consists of the solid obtainable from the emulsion or dispersion.

6. Catalysts according to claim 1, wherein component (c) is prepared by reacting $TiCl_4$ with an emulsion or a dispersion in an inert liquid medium or in the inert gas phase of a liquid phase, obtained by reacting an anhydrous magnesium dihalide with an anhydrous aluminum halide, in an aromatic hydrocarbon, in the presence of a halogenated hydrocarbon.

7. Catalysts according to claim 6, wherein component (c) is prepared by reacting $TiCl_4$ with an emulsion or a dispersion in an aliphatic or cycloaliphatic hydrocarbon, obtained by reacting anhydrous $MgCl_2$ with anhydrous $AlCl_3$ in an aromatic hydrocarbon in the presence of a halogenated hydrocarbon.

8. Catalysts according to claim 1, wherein 2,2,6,6 - tetramethylpiperidide - Al - dialkyl or the reaction mixture between Al-trialkyl and 2,2,6,6 - tetramethylpiperidine containing said piperidide is used as component (b).

9. A process for the polymerization of ethylene and of mixtures thereof with minor proportions of alpha-olefins $CH_2{=}CHR$, in which R is an alkyl radical having from 1 to 10 carbon atoms, characterized in that the monomers are polymerized in the presence of a catalyst as defined in claim 1.

10. Process according to claim 9, wherein the alpha-olefin copolymerized with ethylene is selected from the group consisting of propylene, butene-1, hexene-1, 4 - methylpentene - 1 and octene-1.

11. Crystalline copolymers of ethylene with alpha-olefins $CH_2{=}CHR$, in which R is an alkyl radical having from 2 to 8 carbon atoms, containing less than 6% by moles of alpha-olefins, wherein the MIF/MIE ratio is lower than 30 and wherein the density values are lower than those lying on the straight line passing, on the density/alpha-olefin molar content, through the points having, respectively, a density and an alpha-olefin content of 0.930/1.1. and 0.915/3.7.

12. Crystalline copolymers according to claim 11, in which the MIF/MIE ratio is between 18 and 25.

13. Catalysts according to claim 1, in which compound (a) is an Al-trialkyl.

14. Catalysts according to claim 1, in which compound (c) is the solid comprising the titanium compound supported on an anhydrous magnesium dihalide the crystallites of which have an average size below $3 \cdot 10^{-6}$ cm (300 Å).

**Patentansprüche**

1. Katalysatoren für die Polymerisation von Ethylen und dessen Mischungen mit anderen Olefinen, enthaltend das Reaktionsprodukt zwischen den folgenden Komponenten:

(a) einer Al-Alkyl-Verbindung

(b) einer zumindest ein Stickstoffatom enthaltenden Elektronendonor - Verbindung, die gegenüber $MgCl_2$ reaktiv ist, jedoch unter Standardbedingungen gegenüber Al-Triethyl nicht reaktiv ist, wobei die Verbindung (b) in einem Molverhältnis in Bezug auf die Verbindung (a) von 0,01 bis 10 eingesetzt wird.

(c) dem Reaktionsprodukt zwischen zumindest einer Titanverbindung, die zumindest eine Ti-Halogen-Bindung enthält, und einem wasserfreien Magnesiumdihalogenid, wobei das Reaktionsprodukt entweder von einem Elektronendonor frei ist oder die Verbindung der Formel

$MgTiCl_6 \cdot 2$ Ethylacetat

ist.

2. Katalysatoren gemäß Anspruch 1, worin die Stickstoff enthaltende Verbindung (b) unter 2,2,6,6 - Tetramethylpiperidin, N - Methyl - 2,2,6,6 - tetramethylpiperidin, Tetramethyldiaminomethan, Tetramethylethylendiamin, 2,2 - Dimethyldihydrochinolin und 2,2,6,6 - Tetramethylpiperidid - Al - diethyl ausgewählt ist.

3. Katalysatoren gemäß Anspruch 2, worin die Komponente (c) eine auf einem wasserfreien Magnesiumdihalogenid aufgebrachte Titanverbindung enthält, dessen Kristallite eine durchschnittliche Größe unterhalb $1{,}5 \cdot 10^{-6}$ cm (150 Å) besitzen.

4. Katalysatoren gemäß Anspruch 1, worin die Komponente (c) hergestellt wird, indem man Mischungen des Titanhalogenids mit dem wasserfreien Magnesiumdihalogenid in derartigen Anteilen gemeinsam vermahlt, daß der Titangehalt in der Mischung zwischen 0,1 und 10 Gew.-% beträgt.

5. Katalysatoren gemäß Anspruch 1, worin die Komponente (c) aus einer Emulsion oder einer Dispersion in einem inerten flüssigen Medium oder in der Inertgasphase einer flüssigen Phase, die eine in einem aliphatischen Kohlenwasserstoff nicht mischbare Titanverbindung umfaßt, besteht, oder aus dem aus der Emulsion oder Dispersion erhältlichen Feststoff besteht.

6. Katalysatoren gemäß Anspruch 1, worin die Komponente (c) hergestellt wird, indem man $TiCl_4$ mit einer Emulsion oder einer Dispersion in einem inerten flüssigen Medium oder in der Inertgasphase einer flüssigen Phase, erhalten durch Umsetzung eines wasserfreien Magnesiumdihalogenids mit einem wasserfreien Aluminiumhalogenid in einem aromatischen Kohlenwasserstoff in Gegenwart eines halogenierten Kohlenwasserstoffs, umsetzt.

7. Katalysatoren gemäß Anspruch 6, worin die Komponente (c) hergestellt wird durch Umsetzung von $TiCl_4$ mit einer Emulsion oder einer Dispersion in einem aliphatischen oder cycloaliphatischen Kohlenwasserstoff, erhalten durch Umsetzung von wasserfreiem $MgCl_2$ mit wasserfreiem $AlCl_3$ in einem aromatischen Kohlenwasserstoff in Gegenwart eines halogenierten Kohlenwasserstoffs.

8. Katalysatoren gemäß Anspruch 1, worin 2,2,6,6 - Tetramethylpiperidid - Al - dialkyl oder die Reaktionsmischung zwischen Al-Trialkyl und 2,2,6,6 - Tetramethylpiperidin, die dieses Piperidid enthält, als Komponente (b) verwendet wird.

9. Verfahren zur Polymerisation von Ethylen und dessen Mischungen mit geringeren Anteilen an Alpha-Olefinen $CH_2=CHR$, worin R für einen Alkylrest mit 1—10 Kohlenstoffatomen steht, dadurch gekennzeichnet, daß die Monomeren in Gegenwart eines Katalysators, wie in Anspruch 1 definiert, polymerisiert werden.

10. Verfahren gemäß Anspruch 9, worin das mit Ethylen copolymerisierte Alpha-Olefin unter Propylen, Buten-1, Hexen-1, 4-Methylpenten-1 und Octen-1 ausgewählt wird.

11. Kristalline Copolymere von Ethylen mit Alpha-Olefinen $CH_2=CHR$, worin R für einen Alkylrest mit 2—8 Kohlenstoffatomen steht, die weniger als 6 Mol-% Alpha-Olefine enthalten, worin das MIF/MIE-Verhältnis geringer als 30 ist, und worin die Dichtewerte geringer sind als diejenigen, die auf einer geraden Linie liegen, die, bezogen auf Dichte/Alpha - Olefin - Molgehalt, durch die Punkte führt, die eine Dichte bzw. einen Alpha - Olefingehalt von 0,930/1,1 und 0,915/3,7 aufweisen.

12. Kristalline Copolymere gemäß Anspruch 11, worin das MIF/MIE-Verhältnis zwischen 18 und 25 liegt.

13. Katalysatoren gemäß Anspruch 1, worin die Verbindung (a) ein Al-Trialkyl ist.

14. Katalysatoren gemäß Anspruch 1, worin die Verbindung (c) der Feststoff ist, der die Titanverbindung auf einem wasserfreien Magnesiumdihalogenid aufgebracht enthält, dessen Kristallite eine durchschnittliche Größe unterhalb $3 \cdot 10^{-6}$ cm (300 Å) aufweisen.

**Revendications**

1. Catalyseurs pour la polymérisation de l'éthylène et de ses mélanges avec d'autres oléfines, comprenant le produit de la réaction entre les composants suivants:

(a) un composé Al-alkyle;

(b) un composé donneur d'électrons contenant au moins un atome d'azote, ledit composé étant réactif vis-à-vis de $MgCl_2$ mais non vis-à-vis de l'Al-triéthyle dans les conditions standard de réaction, le composé (b) étant utilisé selon un rapport en moles, par rapport au composé (a), de 0,01 à 10;

(c) le produit de la réaction entre au moins un composé du titane contenant au moins une liaison Ti-halogène et un dihalogénure de magnésium anhydre, ledit produit de réaction étant soit exempt de tout donneur d'électrons, soit le composé ayant la formule $MgTiCl_6 \cdot 2$ (acétate d'éthyle).

2. Catalyseurs selon la revendication 1, dans lesquels le composé azoté (b) est choisi dans le groupe comprenant la 2,2,6,6 - tétraméthylpipéridine, la N - méthyl - 2,2,6,6 - tétraméthylpipéridine, le tétraméthyldiaminométhane, la tétraméthyléthylènediamine, la 2,2 - diméthyldihydroquinoléine et le 2,2,6,6 - tétraméthylpipéridide - Al - diéthyle.

3. Catalyseurs selon la revendication 2, dans lesquels le composant (c) comprend un composé du titane fixé sur un support de dihalogénure de magnésium anhydre dont les cristallites ont une granulométrie moyenne inférieure à $1{,}5 \cdot 10^{-6}$ cm (150 Angströms).

4. Catalyseurs selon la revendication 1, dans lesquels on prépare le composant (c) en broyant simultanément des mélanges d'halogénure de titane et de dihalogénure de magnésium anhydre en des proportions telles que la teneur du mélange en titane soit comprise entre 0,1 et 10% en poids.

5. Catalyseurs selon la revendication 1, dans lequels le composant (c) est constitué d'une émulsion ou d'une dispersion, dans un milieu liquide inerte ou dans la phase gazeuse inerte, d'une phase liquide comprenant un composé du titane non-miscible dans un hydrocarbure aliphatique, ou encore il est constitué du solide que l'on peut obtenir à partir de l'émulsion ou de la dispersion.

6. Catalyseurs selon la revendication 1, dans lesquels on prépare le composant (c) en faisant réagir du $TiCl_4$ avec une émulsion, dans un milieu liquide inerte ou dans la phase gazeuse inerte, d'une phase liquide,

obtenue en faisant réagir un dihalogénure de magnésium anhydre avec un halogénure d'aluminium anhydre, dans un hydrocarbure aromatique et en présence d'un hydrocarbure halogéné.

7. Catalyseurs selon la revendication 6, dans lesquels on prépare le composant (c) en faisant réagir du $TiCl_4$ avec une émulsion ou une dispersion dans un hydrocarbure aliphatique ou cycloaliphatique, obtenu en faisant réagir du $MgCl_2$ anhydre avec de l'$AlCl_3$ anhydre dans un hydrocarbure aromatique en présence d'un hydrocarbure halogéné.

8. Catalyseurs selon la revendication 1, dans lesquels on utilise comme composant (b) un 2,2,6,6 - tétraméthylpipéridide - Al - dialkyle ou le mélange réactionnel d'Al-trialkyle et de 2,2,6,6 - tétraméthylpipéridine contenant ledit pipéridide.

9. Procédé pour la polymérisation de l'éthylène ou de ses mélanges avec des proportions mineures d'α-oléfines $CH_2$=CHR, où R est un radical alkyle ayant de 1 à 10 atomes de carbone, caractérisé en ce que les monomères sont polymérisés en présence d'un catalyseur tel que défini dans la revendication 1.

10. Procédé selon la revendication 9, dans lequel l'α-oléfine polymérisée avec l'éthylène est choisie dans le groupe comprenant le propylène, le butène-1, l'hexène-1, le 4-méthylpentène-1 et l'octène-1.

11. Copolymères cristallins de l'éthylène et d'α-oléfines $CH_2$=CHR, où R est un radical alkyle ayant de 2 à 8 atomes de carbone, contenant moins de 6% en moles d'α-oléfines, le rapport des indices de fluidité MIF/MIE étant inférieur à 30, et les densités étant inférieures à celles se trouvant sur la droite passant, sur la courbe densité/teneur en α-oléfines, en moles, par les points correspondant respectivement à une densité et à une teneur en alpha-oléfines de 0,930/1,1 et 0,915/3,7.

12. Copolymères cristallins selon la revendication 11, dans lesquels le rapport MIF/MIE est compris entre 18 et 25.

13. Catalyseurs selon la revendication 1, dans lesquels le composé (a) est un Al-trialkyle.

14. Catalyseurs selon la revendication 1, dans lesquels le composé (c) est le solide comprenant le composé du titane fixé sur un support de dihalogénure de magnésium anhydre dont les cristallites ont une taille moyenne inférieure à $3 \cdot 10^{-6}$ cm (300 Angstrom).